(19) Europäisches Patentamt
European Patent Office
Office européen des brevets

(11) **EP 1 253 418 B1**

(12) **EUROPEAN PATENT SPECIFICATION**

(45) Date of publication and mention
of the grant of the patent:
**07.02.2007 Bulletin 2007/06**

(51) Int Cl.:
*G01N 21/21* *(2006.01)*    *G01B 11/06* *(2006.01)*

(21) Application number: **02008579.1**

(22) Date of filing: **16.04.2002**

(54) **Use of a spectroscopic ellipsometer**

Verwendung eines spektroskopischen Ellipsometers

Utilisation d'un ellipsomètre spectroscopique

(84) Designated Contracting States:
**DE FR GB**

(30) Priority: **25.04.2001 JP 2001127495**

(43) Date of publication of application:
**30.10.2002 Bulletin 2002/44**

(73) Proprietor: **HORIBA, LTD.**
**Kyoto (JP)**

(72) Inventor: **Kanzaki, Toyoki,**
**c/o Horiba, Ltd.**
**Kyoto (JP)**

(74) Representative: **Müller - Hoffmann & Partner**
**Patentanwälte,**
**Innere Wiener Strasse 17**
**81667 München (DE)**

(56) References cited:
WO-A-02/079760          US-A- 5 608 526
US-A- 6 128 085

• ESTABIL J J ET AL: "A COMBINED
SPECTROSCOPIC ELLIPSOMETER AND
SPECTROPHOTOMETER" SOLID STATE
TECHNOLOGY, COWAN PUBL.CORP.
WASHINGTON, US, vol. 38, no. 4, 1 April 1995
(1995-04-01), pages 71-72, XP000521057 ISSN:
0038-111X

**Description**

<u>BACKGROUND OF THE INVENTION</u>

<u>Field of the Invention</u>

The present invention relates to the use of a spectroscopic ellipsometer for measuring the thickness of a thin film on surfaces of the sample such as a semiconductor wafer, a reticle/mask, a glass substrate of a liquid crystal display (LCD) and the like.

<u>Description of the Prior Art</u>

A spectroscopic ellipsometer observes the change of polarization state when light reflects on the surface of a substance to measure optical constants (refractive index, extinction coefficient) of the substance, and when a thin film layer exists on the surface of the substance, it measures the film thickness and the optical constants.

In the conventional spectroscopic ellipsometer, since an F-number in an irradiating optical system has been equalized with that in a detective optical system, the distribution range of the incidence angle of an irradiating light entering the surface of the sample has been wide. Since the spectroscopic ellipsometer determines the objective values through arithmetic processing based on the angle of incidence of the irradiating light, a polarization characteristic of the irradiating light and a reflected light and the like, measurement of a high degree of precision becomes difficult when the distribution range of the incidence angle of the irradiating light is wide.

If, for this situation, the incidence angle of the irradiating light is intended to keep constant, this leads to irradiate the surface of the sample more widely and therefore it is not possible to respond to a requirement to measure only an infinitesimal area.

By the way, in the spectroscopic ellipsometer, the angle of incidence of the irradiating light to the surface of the sample, a wavelength and a polarization state are controlled, and the thickness, the refractive index (dielectric constant) and the like of the sample are estimated by arithmetic processing from the polarization characteristic of the reflected light and a reflection coefficient for each polarization component at the surface of the sample in each condition. Therefore, the angle of incidence of the irradiating light is an important controlling element from a measurement viewpoint and it is most ideal that the irradiating light is a collimated light beam.

However, in actual fact, there are many cases aimed at measuring only the infinitesimal area at the surface of the sample, and it is general to allow the irradiating light to have a certain magnitude of a solid angle to control a beam spot diameter of the irradiating light on the surface of the sample in this case.

And, when light is condensed to one point using an optical system, a beam spot diameter d obtained is generally expressed by the following equation (1)

$$d = A \cdot \lambda \cdot F_{no.} \cdots\cdots\cdots (1),$$

wherein A is a constant, $\lambda$ is a wavelength, $F_{no.}$ is an F-number and the F-number is a magnitude which is given by f/D when the diameter of an entrance pupil of the optical system is expressed by a letter of D and a focal length by a letter of f.

As understood from the equation (1) described above, it is necessary to lessen the F-number for reducing the beam spot diameter d more. In this case, a gradient of the beam come to have the gradient corresponding to the magnitude of the F-number. When the beam spot diameter d is reduced like this, the distribution of the gradient of the irradiating light becomes wide, but the case which is less in the distribution of the gradient of the irradiating light is higher in measurement precision when the reflected light is introduced to a detector all at once to detect signals.

Document US 5,608,526 discloses a spectroscopic ellipsometer, comprising: an irradiating optical system for irradiating the surface of a sample with polarized light, and a detective optical system for outputting data with respect to the surface of the sample based on an amount of polarization state change of elliptically polarized light reflected on the surface of the sample, wherein an F-number $f_S/D_S$ of the irradiating optical system is set to a level being suitable for obtaining a beam spot diameter at the surface of the sample, and an F-number $f_K/D_K$ of the detective optical system is set to be higher than the F-number $f_S/D_S$ of the irradiating optical system, wherein $f_S$ and $f_K$ are respective focal lengths of the irradiating/detective optical systems, and $D_S$ and $D_K$ are respective diameters of irradiating/detective light beams passing through the irradiating/detective optical systems. Further spectroscopic ellipsometers are disclosed in documents US 6,128,085 and "Estabil JJ ET AL: "A Combined Spectroscopic Ellipsometer and Spectrophotometer" Solid State Technology, Cowan Publ.Corp. Washington, US, vol. 38, no. 4, 1 April 1995 (1995-04-01), pages 71-72, ISSN: 0038-111X.

The present invention has been made in consideration of matters described above, and an object of the present invention is to provide a method of measuring with the help of a spectroscopic ellipsometer capable of measuring an infinitesimal area with a high degree of precision.

SUMMARY OF THE INVENTION

To achieve the above-mentioned object the present invention provides the use of a spectroscopic ellipsometer as defined in claim 1.

BRIEF DESCRIPTION OF THE DRAWINGS

Figure 1 is a view showing schematically the construction of a spectroscopic ellipsometer which can be used according to a first embodiment of the present invention.
Figure 2 is a view showing schematically the construction of a spectroscopic ellipsometer which is not part of the present invention.
Figure 3 is a view showing schematically the construction of a spectroscopic ellipsometer which can be used according to a third embodiment of the present invention.

DETAILED DESCRIPTION OF THE PREFERRED EMBODIMENTS

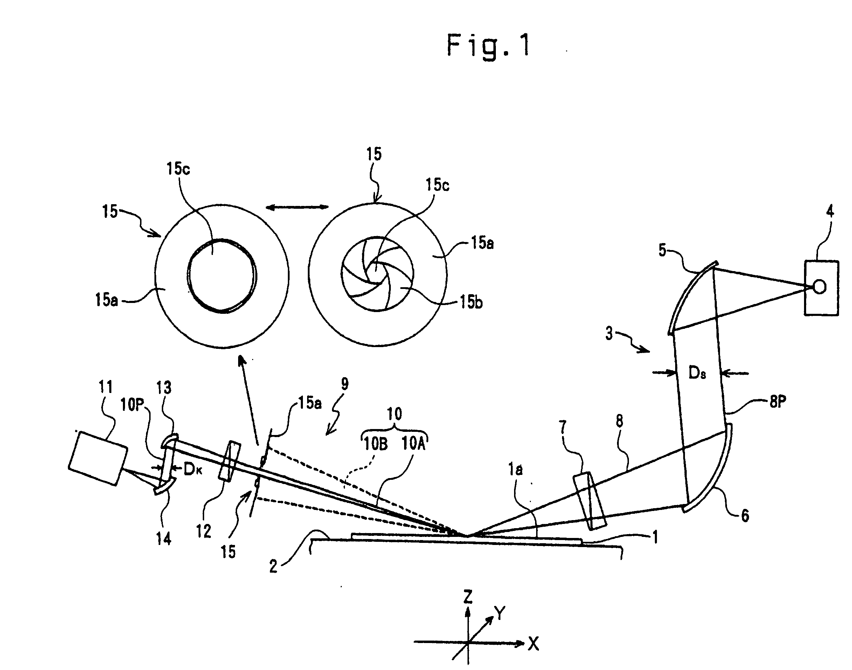

Hereinafter, the details of the present invention will be described in reference to the drawings. Figure 1 shows schematically the construction of a spectroscopic ellipsometer which can be used according to a first embodiment of the present invention. In this drawing, a reference number 1 denotes a sample (e.g. a wafer), and is held horizontally on a sample stage 2. This sample stage 2 is constructed so as to suck the sample 1 on it with means such as vacuum adsorption and to hold the sample 1 in a horizontal condition, and to move it linearly to three directions of X-direction (horizontal direction of the drawing), Y-direction (perpendicular direction to the drawing) and Z-direction (vertical direction parallel to the drawing), respectively, which are orthogonal to each other, with a stage-holding mechanism (not shown).

And, a reference number 3 denotes an irradiating optical system provided on one side above the sample stage 2, and consists of a light source section 4, reflectors 5, 6, a polarizer 7. The light source section 4 is provided with a white light source consisting of, for example, a xenon lamp emitting the light having the wide wavelength region of, for example, from 190 nm to 830 nm and a slit for reducing a light (irradiating light) 8 emitted from the white light source to an appropriate diameter. The reflector 5 close to the light source section 4 consists of, for example, a concave mirror, and is installed so as to position the light source section 4 at the position of a focal point thereof, and therefore the irradiating light 8 directed from the reflector 5 to another reflector 6 is made to be a parallel rays of light having an appropriate diameter. The reflector 6 consists of, for example, a concave mirror, receives the parallel rays of light 8P from the reflector 5 and condenses it through a polarizer 7 onto the specified position of the surface 1a of the sample so as to form a specified beam spot diameter. The polarizer 7 linearly polarizes the irradiating light 8 from the reflector 6 in a specified direction.

And, when a diameter of the above-mentioned collimated light beam 8P is expressed by $D_S$ and a focal length of the reflector 6 is expressed by $f_S$, the F-number (hereinafter, referred to as $F_{no.S}$) of the above-mentioned irradiating optical system 3 is expressed by the following equation

$$F_{no.s} = f_s / D_s \cdots\cdots (2)$$

and the magnitude of the $F_{no.s}$ is set at a sufficiently small value for attaining a beam spot diameter to be aimed at the surface 1a of the sample.

And, a reference number 9 denotes a detective optical system provided on the other side above the sample stage 1, and when the linearly polarized light 8 is irradiated on the surface 1a of the sample, it outputs the amount of polarization state change of an elliptically polarized light 10 reflected on the surface 1a of the sample, for example, to a spectrometer 11, and it consists of an analyzer 12, reflectors 13, 14, a mask member 15 and the like. The reflector 13 close to the analyzer 12 consists of, for example, a concave mirror, and is installed so as to position the surface 1a of the sample at the position of a focal point thereof, and makes the elliptically polarized light 10, passing through an aperture 15c (opening) of the mask member 15, a parallel rays of light 10P to reflect it to another reflector 14. The reflector 14 consists of, for example, a concave mirror, and outputs the parallel rays of light 10P from the reflector 13 to the spectrometer 11. And, the mask member 15 has a function of optical mask to pass only a light 10A at the center of the optical axis of the above-mentioned elliptically polarized light 10 and consists of, for example, a plate member 15a provided with a restricting means 15b being opening-adjustable freely, and is constructed in such a way that a degree of opening of an opening 15c having a shape such as a polygon in a plan view is adjustable appropriately as shown as an enlarged view in the drawing.

And, when a diameter of the above-mentioned parallel rays of light 10P is expressed by $D_K$ and a focal length of the reflector 13 is expressed by $f_K$, the F-number (hereinafter, referred to as $F_{no.\ K}$) of the above-mentioned detective optical system 9 is expressed by the following equation

$$F_{no.\ K} = f_K\ /D_K \cdots\cdots\cdots (3)$$

and the respective F-numbers are set in such a way that the following relationship holds between this $F_{no.\ K}$ and the above-mentioned $F_{no.\ S}$ of the irradiating optical system 3.

$$F_{no.\ S} < F_{no.\ K} \cdots\cdots\cdots (4)$$

Furthermore, the above-mentioned detective optical system 9 is formed so as to introduce only the light 10A having part of a solid angle about the objective angle of reflection to the spectrometer 11 by providing the above-mentioned mask member 15. When the extent of the opening 15c in the mask member 15 is made to pass allows only light 10A of more narrow limit of the angle (solid angle), only the reflected light in the range of the more narrow angle is obtained, and therefore, as apparent from the drawing, the light 10B in a portion designated by a reference character 10B, i.e., a space enclosed by a solid line and a phantom line is wasted significantly. And so, the solid angle of the reflected light 10 introduced to the side of the spectrometer 11 is made to be an optimal value by adjusting the opening of the aperture 15c in the above-mentioned mask member 15 in consideration of the amount of light of the reflection and the distribution of the spectral sensitivity of the spectrometer 11.

In the spectroscopic ellipsometer constructed as described above, since the reflected light 10 from the surface 1a of the sample can be extracted with the small solid angle while a measurement area at the surface 1a of the sample is lessened by lessening the area irradiated by the irradiating optical system 3, it is possible to measure only the infinitesimal area with a high degree of precision without lowering the precision of measurement.

By the way, in the above-mentioned first embodiment, the mask member 15 may be installed at any appropriate location in an optical path leading to the spectrometer 11.

And, when aberration (e.g. spherical aberration) which affects the gradient of the light relative to the direction parallel to the drawing (X-direction) is sufficiently small, the aperture 15c in the mask member 15 formed in the form of a slit which extends linearly in the above-mentioned Y-direction may be provided in the irradiating optical system 3 depending on the position in the direction perpendicular to the drawing (Y-direction) in Figure 1. Thus, the reflected light to be wasted is reduced, and the amount of light may be effectively utilized.

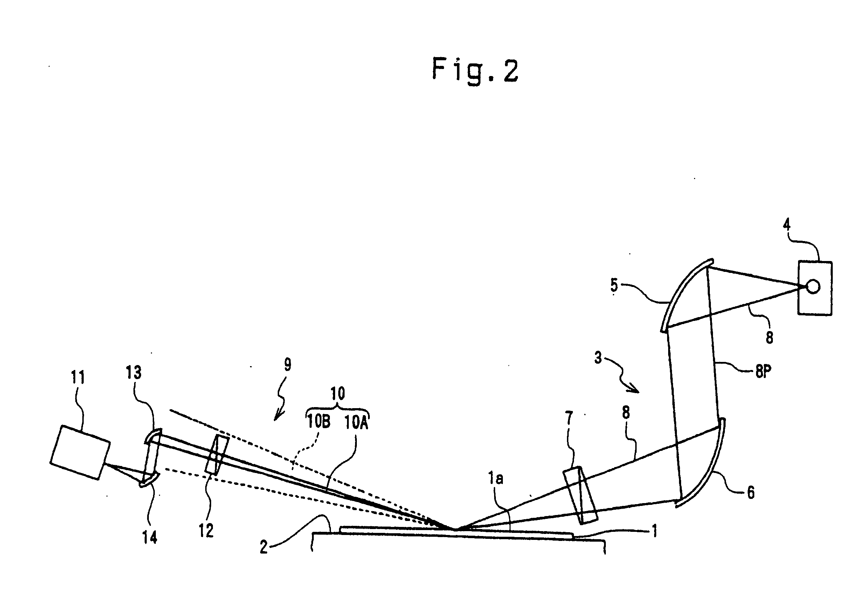

Figure 2 shows a second embodiment, which is not part of the present invention, wherein the installation of the mask member 15 the detective optical system 9 is omitted, and the reflector 13 is allowed to have the function of an optical mask.

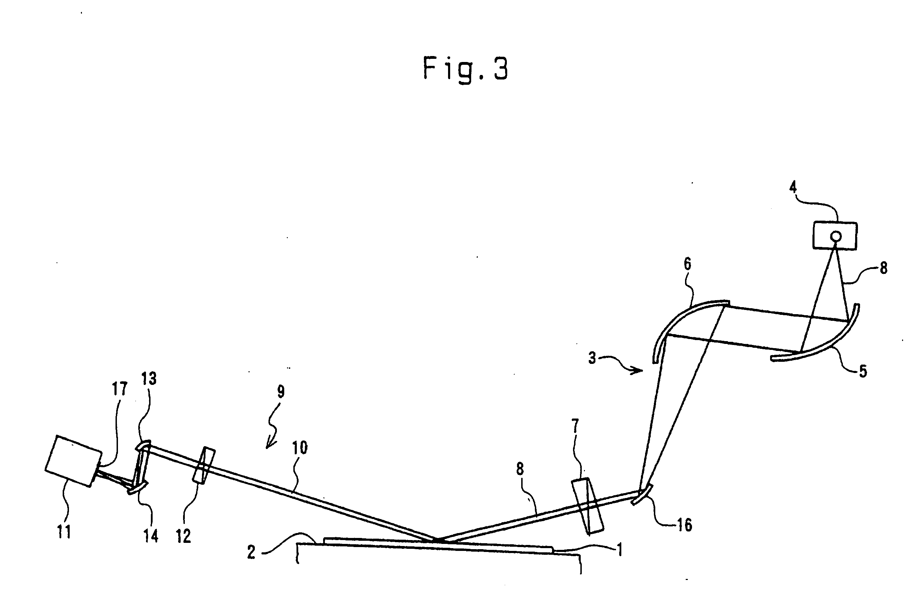

Figure 3 shows a third embodiment of the present invention, and, in this embodiment, the reflector 16 consisting of, for example, a concave mirror, is provided between the reflector 6 and the polarizer 7, and the irradiating light 8 to the surface 1a of the sample is made to be a light close to the parallel rays of light as far as possible by taking the large $F_{no.\ S}$ of the irradiating optical system 3 while a mask member 17 having a similar constitution to the above-mentioned mask member 15 is provided, for example, to the spectrometer 11 of the detective optical system 9.

It goes without saying that respective relationships of the F-numbers of the irradiating optical system 3 and the detective optical system 9 in the second and the third embodiments described above are like that of the irradiating optical system 3 and the detective optical system 9 in the first embodiment. And, actions and effects in these embodiments are similar to that in the first embodiment.

As described above, in the present invention, it is possible to measure only the infinitesimal area with a high degree of precision without lowering the precision of measurement since, in the spectroscopic ellipsometer provided with the irradiating optical system for irradiating the polarized light to the surface of the sample and the detective optical system for outputting data with respect to the surface of the sample based on the amount of polarization state change of the elliptically polarized light reflected on the surface of the sample, the F-number in the above-mentioned irradiating optical system is set at the magnitude of the level of being capable of obtaining the beam spot diameter at the surface of the sample, and the F-number of the above-mentioned detective optical system is set to be higher than the F-number in the above-mentioned irradiating optical system. Therefore, it is possible to measure the infinitesimal area in various kinds of samples such as the semiconductor wafer and the reticle/mask advancing in microelectronics technology and microminiaturization with a higher degree of precision and more reliably.

**Claims**

1. Use of a spectroscopic ellipsometer, comprising: an irradiating optical system (3) for irradiating the surface of a sample (1) with polarized light (8), and a detective optical system (9) for outputting data with respect to the surface of the sample (1) based on an amount of polarization state change of elliptically polarized light (10) reflected on the surface of the sample (1), the detective optical system comprising a spectrometer (11), wherein an F-number $f_S/D_S$ of the irradiating optical system (3) is set to a level being suitable for obtaining a beam spot diameter at the surface of the sample (1), and an F-number $f_K/D_K$ of the detective optical system (9) is set to be higher than the F-number $f_S/D_S$ of the irradiating optical system (3), wherein $f_S$ and $f_K$ are respective focal lengths of the irradiating/detective optical systems, and $D_S$ and $D_K$ are respective diameters of irradiating/detective light beams passing through the irradiating/detective optical systems,
wherein

   - the detective optical system (9) comprises a mask member (15, 17) for filtering light (10A) within a specific solid angle out of the elliptically polarized detective light beam (10), said mask member (15, 17) having an aperture (15c)
   - only the filtered light (10A) is guided to the spectrometer (11) of the ellipsometer, and
   - the specific solid angle is freely adjustable by a restricting element (15b) being part of the mask member (15, 17), **characterized in that**, the position of the mask member and its aperture (15c)
   with regard to the spectrometer and the irradiating optical system (3) within the ellipsometer being so that light (10A) within a specific solid angle is filtered out of the elliptically polarized detective light beam (10), the axis of the solid angle being identical with the axis of the detective light beam (10).

**Patentansprüche**

1. Verwendung eines spektroskopischen Ellipsometers, umfassend:

   ein optisches Bestrahlungssystem (3) zum Bestrahlen der Oberfläche einer Probe (1) mit polarisiertem Licht (8), und ein optisches Detektorsystem (9) zum Ausgeben von Daten bezüglich der Oberfläche der Probe (1) auf der Grundlage eines Betrags einer Polarisationzustandsänderung von elliptisch polarisiertem Licht (10), das an der Oberfläche der Probe (1) reflektiert wird, wobei das optische Detektorsystem ein Spektrometer (11) umfasst, wobei eine F-Zahl $f_S/D_S$ des optischen Bestrahlungssystems (3) auf einen Wert eingestellt ist, der geeignet ist, um einen Strahlpunktdurchmesser an der Oberfläche der Probe (1) zu erhalten, und eine F-Zahl $f_K/D_K$ des optischen Detektorsystems (9) eingestellt ist, höher als die F-Zahl $f_S/D_S$ des optischen Bestrahlungssystems (3) zu sein, wobei $f_S$ und $f_K$ jeweilige Brennweiten der optischen Bestrahlungs-/Detektor-Systeme sind, und $D_S$ und $D_K$ jeweilige Durchmesser von Bestrahlungs-/Detektor-Lichtstrahlen sind, die durch die optischen Bestrahlungs-/Detektor-Systeme laufen,
   - wobei das optische Detektorsystem (9) ein Maskenelement (15, 17) zum Filtern von Licht (10A) innerhalb eines spezifizierten Raumwinkels aus dem elliptisch polarisiertem Detektorlichtstrahl (10) umfasst, wobei das Maskenelement (15, 17) eine Apertur (15c) aufweist,
   - nur das gefilterte Licht (10A) zu dem Spektrometer (11) des Ellipsometers geführt wird, und
   - der spezifische Raumwinkel durch ein Einengungselement (15b), das ein Teil des Maskenelements (15, 17) ist, frei einstellbar ist,

   **dadurch gekennzeichnet, dass** die Position des Maskenelements und seiner Apertur (15c) hinsichtlich des Spektrometers und des optischen Bestrahlungssystems (3) innerhalb des Ellipsometers so ist, dass Licht (10A) innerhalb eines spezifizierten Raumwinkels aus dem elliptisch polarisiertem Detektorlichtstrahl (10) ausgefiltert wird, wobei die Achse des Raumwinkels identisch zu der Achse des Detektorlichtstrahls (10) ist.

**Revendications**

1. Utilisation d'un ellipsomètre spectroscopique comprenant : un système optique d'éclairement (3) pour éclairer la surface d'un échantillon (1) avec une lumière polarisée (8), et un système optique de détection (9) pour émettre des données concernant la surface de l'échantillon (1) en fonction d'une quantité de changement d'état de polarisation de lumière polarisée elliptiquement (10) réfléchie sur la surface de l'échantillon (1), le système optique de détection comprenant un spectromètre (11), dans laquelle un nombre F $f_s/D_s$ du système optique d'éclairement (3) est fixé à un niveau adapté pour obtenir un diamètre de spot de faisceau à la surface de l'échantillon (1), et un nombre F $f_k/D_k$ du système optique de détection (9) est fixé pour être plus grand que le nombre F $f_s/D_s$ du système optique d'éclairement (3), $f_s$ et $f_k$ étant les longueurs focales respectives des systèmes optiques d'éclairement/de détection, et $D_S$ et $D_k$ étant les diamètres respectifs des faisceaux lumineux d'éclairement/de détection passant à travers les systèmes optiques d'éclairement/de détection,
dans laquelle,

   - le système optique de détection (9) comprend un élément formant masque (15, 17) pour filtrer une lumière (10A) dans un angle solide spécifique extérieur au faisceau de lumière de détection polarisée elliptiquement (10), ledit élément formant masque (15, 17) comprenant une ouverture (15c)
   - seule la lumière filtrée (10A) est guidée vers le spectromètre (11) de l'ellipsomètre, et
   - l'angle solide spécifique est librement ajustable par un élément de restriction (15b) faisant partie de l'élément formant masque (15, 17),

   **caractérisée en ce que** la position de l'élément formant masque et de son ouverture (15c) par rapport au spectromètre et au système optique d'éclairement (3) de l'ellipsomètre est telle qu'une lumière (10A) située dans un angle solide spécifique est extraite par filtrage du faisceau lumineux de détection polarisé elliptiquement (10), l'axe de l'angle solide étant identique à l'axe du faisceau lumineux de détection (10).

Fig.1

EP 1 253 418 B1

Fig.2

# Fig.3